# EUROPEAN PATENT APPLICATION

(11) **EP 3 088 708 A1**
(43) Date of publication of application: **02.11.2016**
(21) Application number: 15001263.1
(22) Date of filing: 29.04.2015
(51) Int. Cl.: F02D 9/10, F16K 1/22

(54) **THROTTLE VALVE FOR AN INTERNAL COMBUSTION ENGINE**

(71) Applicant: Caterpillar Motoren GmbH & Co. KG, 24159 Kiel (DE)
(72) Inventor: Sixel, Eike Joachim, 24109 Kiel (DE)
(74) Representative: Kramer Barske Schmidtchen Patentanwälte PartG mbB

(57) **Abstract**

A throttle valve (112) includes a conduit (114), a first flap (116), and a second flap (118). The first flap (116) and the second flap (118) are laterally disposed within the conduit (114) and adjacently located to each other. The first flap (116) is positioned rotatable about a first axis (C-C') while the second flap (118) is positioned rotatable about a second axis (D-D'). The first and second axes (C-C', D-D') are disposed at an angle to a direction (E) of the flow of air within the conduit (114). A portion (126) of the first flap (116) and a portion (128) of the second flap (118) are each disposed away from an internal surface (130) of the conduit (114) to define an opening (132) with the internal surface (130) of the conduit (114). The opening (132) is configured to allow a pre-determined minimal amount of air to flow into a combustion chamber (102) of an engine (100) when the first flap (116) and the second flap (118) are in the fully closed position.

## Description

### Technical Field

The present disclosure relates to a throttle valve, and more particularly, to a throttle valve that offers to provide a pre-determined minimal amount of air to an engine when the engine is in an idle state or operating in a low-load condition.

### Background

In recent times, large medium-speed Otto and Dual Fuel engines are being used in some of the newer applications such as, but not limited to, marine applications. These applications have been presenting newer challenges in terms of performance requirements from engines as compared to performance requirements that were typically associated with older applications, say for *e.g.,* electric power generation. Some of the new applications may require engines to reliably operate in one or more operating ranges such as, but not limited to, an idling state or a low-load condition.

When idling or running in low-load conditions, engines may begin to operate on leaner air-fuel ratios as a constant supply of air is being used to combust fuel in the engine. In such cases, it may be desirable to reduce the flow of air and maintain an optimum air-fuel ratio to the engine. Therefore, manufacturers have now been focusing on developing devices or systems that can effectively regulate the flow of air to engines as the engines operate under idling or low-load conditions. However, current designs of throttle bodies have been known to contain several adjustment mechanisms for controlling an amount of air flow into the engines during idling- and/or low load conditions. Therefore, a construction and manner of operation associated with use of the current designs of throttle bodies could be complex.

Hence, there is a need for a throttle valve that is simple yet effective in regulating the flow of air to engines when operating in idling and/or low-load conditions.

### Summary of the Disclosure

In one aspect of the present disclosure, a throttle valve for regulating a flow of air into an internal combustion engine includes a conduit, a first flap, and a second flap. The first flap and the second flap are laterally disposed within the conduit and adjacently located to each other. The first flap is positioned rotatable about a first axis while the second flap is positioned rotatable about a second axis. The first and second axes are disposed at an angle to a direction of the flow of air within the conduit. A portion of the first flap and a portion of the second flap are each disposed away from an internal surface of the conduit to defme an opening with the internal surface of the conduit. The opening is configured to allow a pre-determined minimal amount of air to flow into a combustion chamber of the engine when the first flap and the second flap are in the fully closed position.

In another aspect of the present disclosure, a throttle valve for regulating a flow of air into an internal combustion engine includes a conduit, and a flap laterally disposed within the conduit. The flap is positioned rotatable about an axis that is disposed at an angle to a direction of the flow of air. The flap includes a first portion and a second portion that is disposed in a contiguous relation with the first portion. The first portion is disposed proximal to an internal surface of the conduit while the second portion is spaced away from the internal surface of the conduit to define an opening with the internal surface of the conduit. The opening is configured to allow a pre-determined minimal amount of air to flow into a combustion chamber of the engine when the flap is in a fully closed position.

In yet another aspect of the present disclosure, a throttle valve for regulating a flow of air into an internal combustion engine includes a conduit, and a flap that is laterally disposed within the conduit. The flap is positioned rotatable about an axis that is disposed at an angle to a direction of the flow of air. The flap defines at least one opening therethrough. The opening is configured to allow a pre-determined minimal amount of air to flow into a combustion chamber of the engine when the flap is in a fully closed position.

Other features and aspects of this disclosure will be apparent from the following description and the accompanying drawings.

### Brief Description of the Drawings

FIG. 1 is a front sectional view of an exemplary engine employing a throttle valve, in accordance with embodiments of the present disclosure;
FIG. 2 is a top sectional view of the throttle valve, in accordance with an embodiment of the present disclosure, taken along sectional line A-A' of FIG. 1;
FIG. 3 is a top sectional view of the throttle valve, in accordance with another embodiment of the present disclosure; and
FIG. 4 is a top sectional view of the throttle valve, in accordance with an alternative embodiment of the present disclosure.

### Detailed Description

Wherever possible, the same reference numbers will be used throughout the drawings to refer to same or like parts. Moreover, references to various elements described herein are made collectively or individually when there may be more than one element of the same type. However, such references are merely exemplary in nature. It may be noted that any reference to elements in the singular is also to be construed to relate to the plural and vice-versa without limiting the scope of the disclosure to the exact number or type of such elements unless set forth explicitly in the appended claims.

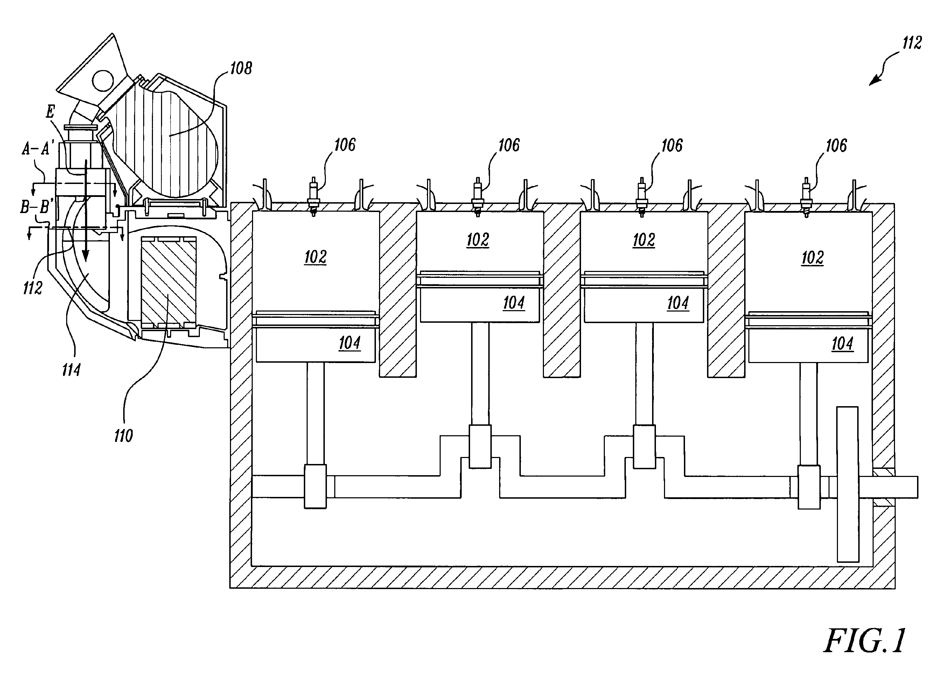

FIG. 1 shows a front sectional view of an exemplary engine 100 in accordance with embodiments of the present disclosure. The engine 100, disclosed herein, is an internal combustion engine. The engine 100 may be configured to operate using fuels such as, but not limited to, Gasoline (Otto-cycle), Diesel (Diesel-cycle), Kerosene, Compressed Natural Gas (CNG), Liquefied Natural Gas (LNG,/ LPG), and Bio-fuels for e.g., Bio-diesel, Ethanol, Methanol and the like. Further, the engine 100 may be of a multi-cylinder type (as shown), or may alternatively be embodied in the form of a single-cylinder engine. Moreover, the engine 100 may be of a V-type configuration, an in-line configuration, or a radial configuration. A person of ordinary skill in the art will appreciate that embodiments of the present disclosure may be beneficially implemented in various types of engines commonly known in the art without deviating from the spirit of the present disclosure.

For the purposes of this disclosure, the engine 100, as shown in FIG. 1, may be regarded as an in-line Diesel engine. As shown in FIG. 1, the engine 100 includes multiple cylinders 102 (hereinafter sometimes referred to as 'combustion chambers' and designated with identical numeral '102'). Each of the cylinders 102 is configured to slidably receive a piston 104 therein for combustion of a fuel-air mixture. Each of the cylinders 102 is provided with a fuel injector 106 (as shown) to deliver a pressurized supply of fuel, for e.g., Diesel. However, a spark plug (not shown) may be optionally used in lieu of the fuel injector 106 depending on a type of the engine 100.

As shown in the illustrated embodiment of FIG. 1, the engine 100 may further include a turbocharger 108 that is configured to increase a flow of air to the combustion chambers 102 of the engine 100. The engine 100 may further include a charge air cooler 110 that is located downstream of the turbocharger 108. The charge air cooler 110 is configured to cool the flow of air before being supplied to the combustion chambers 102 of the engine 100. This way, the turbocharger 108 and the charge air cooler 110 can help increase the attainable power output of the engine 100.

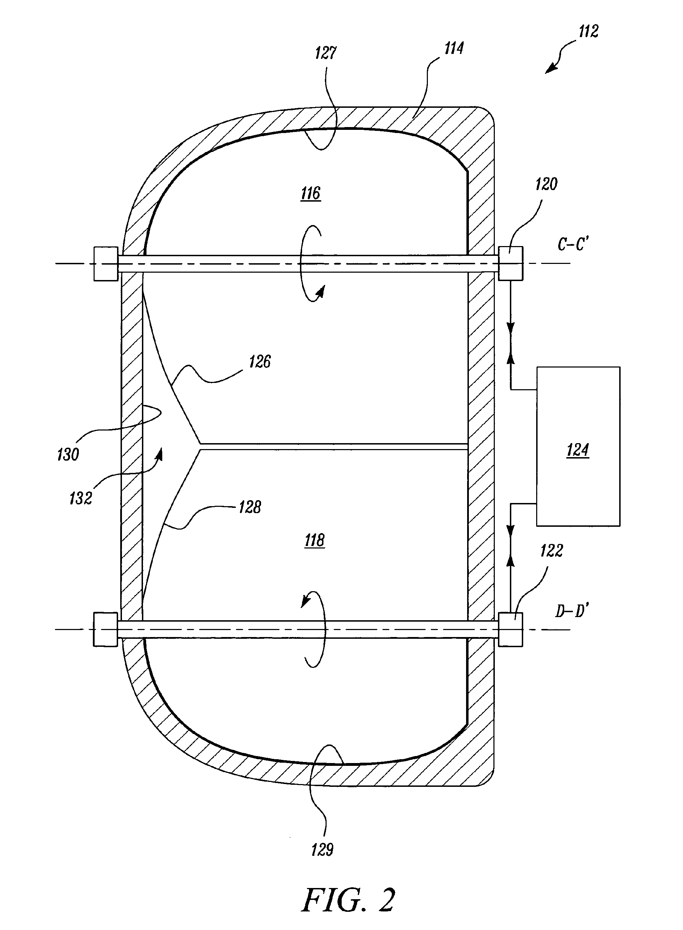

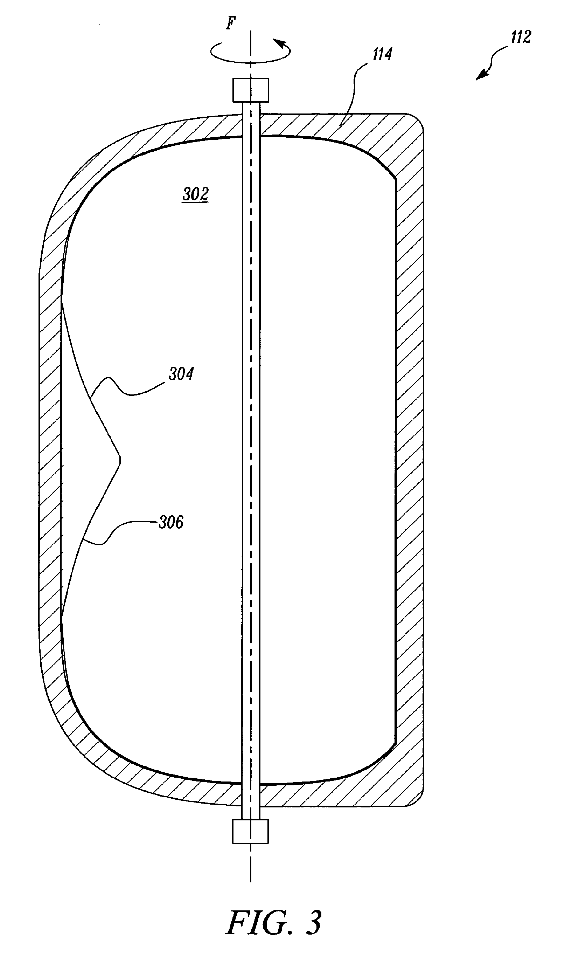

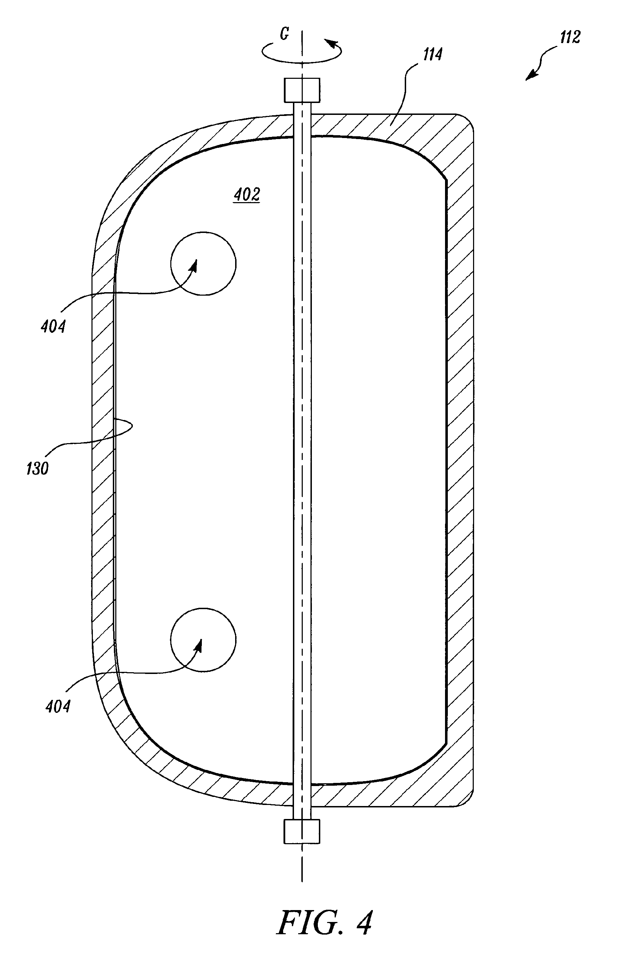

As shown in FIG. 1, the engine 100 employs a throttle valve 112, in accordance with embodiments of the present disclosure, explanation to which will hereinafter be made in conjunction with the accompanying drawings *i.e.,* FIGS. 1-4. FIG. 2 is a top sectional view of the throttle valve 112, in accordance with an embodiment of the present disclosure, taken along sectional line A-A' of FIG. 1. FIG. 3 is a top sectional view of the throttle valve 112, in accordance with another embodiment of the present disclosure, taken along sectional line A-A' of FIG. 1. FIG. 4 is a top sectional view of the throttle valve 112, in accordance with an alternative embodiment of the present disclosure, taken along sectional line A-A' of FIG. 1.

Referring to an embodiment as shown in FIGS. 1-2, the throttle valve 112 includes a conduit 114. The conduit 114 is configured to extend between the turbocharger 108 and the charge air cooler 110 associated with the engine 100. The conduit 114 is configured to allow a fluid communication of air from the turbocharger 108 to the combustion chambers 102 of the engine 100 via the charge air cooler 110. The conduit 114 may be beneficially formed from a sturdy material such as, but not limited to, metals, plastics, polymers, composites and the like. For example, the pipe may be formed from cast steel.

Referring to FIG. 2, the throttle valve 112 further includes a first flap 116, and a second flap 118. The first flap 116 and the second flap 118 are each laterally disposed within the conduit 114 and adjacently located to one another. The first flap 116 is positioned rotatable about a first axis C-C' while the second flap 118 is positioned rotatable about a second axis D-D'. Moreover, each of the first and second axes C-C', D-D', as shown in FIG. 2, are disposed normal to a direction E (refer to FIG. 1) of the flow of air within the conduit 114. As shown in FIG. 2, the throttle valve 112 may include a first pin 120 that is disposed about the first axis C-C' to rotatably couple the first flap 116 to the conduit 114, and a second pin 122 that is disposed about the second axis D-D' to rotatably couple the second flap 118 to the conduit 114.

Although it is disclosed in the illustrated embodiment of FIG. 1 that each of the axes C-C' and D-D' is disposed normal to the direction E of flow of air within the conduit 114, in alternative embodiments, each of the axes C-C' and D-D' can be oriented at an angle to the direction E of flow of air. This way, each of the pins 120 and 122 supporting the flaps 116 and 118 can allow the flaps 116 and 118 to be disposed at angle to the direction E of incoming air when the flaps 116 and 118 are in the fully closed position.

In an embodiment, the first pin 120 may be a spring-loaded pin configured to bias the first flap 116 towards the fully closed position within the conduit 114. Further, the second pin 122 may be embodied in the form of a spring-loaded pin that is configured to bias the second flap 118 towards the fully closed position within the conduit 114. As such, each of the first and second flaps 116, 118 may be operable independently of one another.

In an embodiment of the present disclosure, it can be contemplated to make each of the first and second flaps 116, 118 operable manually *i.e.,* with the help of levers coupled to the flaps, or by other mechanical means commonly known to one skilled in the art. In another embodiment as shown in FIG. 2, the throttle valve 112 may include a controller 124 that is communicably coupled to each of the first and second flaps 116, 118. This controller 124 may be configured to independently control a movement of the first flap 116 and the second flap 118 about the first axis C-C' and the second axis D-D' respectively. In an alternative embodiment, each of the flaps 116 and 118 could be controlled with a single controller 124 and a coupling lever (not shown) that is configured to rotate the flaps 116, 118 about their respective axes C-C' and D-D'. However, it may be noted that various systems for opening and closing of the flaps are commonly known to one skilled in the art and such systems may be readily implemented to accomplish the opening and closing of the flaps.

Referring to FIG. 2, a portion 126 of the first flap 116 and a portion 128 of the second flap 118 are each disposed away from an internal surface 130 of the conduit 114 to define an opening 132 with the internal surface 130 of the conduit 114. The opening 132 is configured to allow a pre-determined minimal amount of air (See directional arrow E indicating flow of air in FIG. 1) to flow into one or more combustion chambers 102 of the engine 100 when the first flap 116 and the second flap 118 are in the fully closed position (shown in FIG. 2). One of ordinary skill in the art will acknowledge that when the engine 100 is in an idling state or in a low-load state, a minimum or threshold amount of air may be required to help combust the fuel in the respective combustion chambers 102 of the engine 100. Moreover, the minimum or threshold amount of air may be beneficially optimized to accomplish a complete combustion of the fuel and hence, reduce NOₓ emissions from the engine 100 when the engine 100 is in the idling or low-load state. For the purposes of this disclosure, the minimum or threshold amount of air disclosed herein can be regarded as the pre-determined minimal amount of air that is to be supplied to the engine 100 in the idling or low-load state.

In an embodiment as shown in FIG. 2, a cross-section of the conduit 114 along the plane B-B' *i.e.,* corresponding to the fully closed position of the first and second flaps 116, 118 shown in FIG. 1, is substantially rectangular. Further, as shown in FIG. 2, a shape of the first flap 116 and the second flap 118 is substantially reniform such that the opening 132 is defined between the internal surface 130 of the conduit 114 and the portions 126, 128 of the first and second flaps 116, 118 respectively.

Although, in the illustrated embodiment of FIG. 2, the cross-section of the conduit 114 along plane B-B' and the shape of the first and second flaps 116, 118 are disclosed as being rectangular and reniform so as to define the opening 132, it may be noted that the shape of the first and second flaps 116, 118 and the cross-section of the conduit 114 disclosed herein is merely exemplary in nature and hence, non-limiting of this disclosure. Other possible shapes for the first and second flaps 116, 118 may be, for example, square, rectangular, and other polygons known in the art while the conduit 114 may be configured to have, for example, a circular, an oblong, or an elliptical cross-section along plane B-B'. The vice-versa may also be possible where the shapes for the first and second flaps 116, 118 may be, for example, circular, oblong, or elliptical while a cross-section of the conduit 114 along plane B-B' may be, for example, square, rectangular, and in the form of other polygons known in the art.

Moreover, it can also be beneficially contemplated to form the first and second flaps 116, 118 from irregular shapes while forming the conduit 114 to have a regular shaped cross-section. Therefore, one of ordinary skill in the art will appreciate that various shapes and cross-sections may be optionally contemplated in forming the first and second flaps 116, 118 and the conduit 114 respectively so as to define the opening 132 of the present disclosure without deviating from the spirit of the present disclosure. Moreover, it will be appreciated that although a single opening 132 is disclosed in the embodiment of FIG. 2, any number of openings may be defined between the internal surface 130 of the conduit 114 and the portions 126, 128 of the first and second flaps 116, 118 depending on the cross-section of the conduit 114 in relation to the shapes of the flaps 116, 118 disposed therein.

Furthermore, it is hereby contemplated that if similar shapes are used in forming the flaps 116, 118 and a cross-section of the conduit 114, then the flaps 116, 118 and the cross-section of the conduit 114 may be configured to have dissimilar sizes so as to the define the opening 132 therebetween. Likewise, if a size of the flaps 116, 118 and a size pertaining to the cross-section of the conduit 114 along the closing position of the flaps 116, 118 are similar; then the shape of the flaps 116, 118 and a cross-section of the conduit 114 along the closing position of the flaps 116, 118 is kept dissimilar so as to define the opening 132 of the present disclosure. Although it is disclosed herein that the portions 126, 128 of the respective flaps 116, 118 are spaced away from the internal surface 130 of the conduit 114 to define the opening 132, it should be noted that a remaining portion 127, 129 of each flap 116, 118 may however be configured to remain proximal to the internal surface 130 of the conduit 114.

In another embodiment as shown in FIG. 3, the throttle valve 112 includes a single flap that is laterally disposed within the conduit 114. The flap, disclosed in this embodiment, is positioned rotatable about an axis F that is substantially normal to the direction E of the flow of air (refer to FIG. 1). As shown, the flap 302 includes a first portion 304 and a second portion 306 that is disposed in a contiguous relation with the first portion 304. The first portion 304 is disposed proximal to the internal surface 130 of the conduit 114 while the second portion 306 is spaced away from the internal surface 130 of the conduit 114 to define an opening 308 with the internal surface 130 of the conduit 114. The opening 308 is configured to allow the pre-determined minimal amount of air to flow into the combustion chambers 102 of the engine 100 (See FIG. 1) when the flap is in a fully closed position.

In an alternative embodiment as shown in FIG. 4, the throttle valve 112 includes a flap 402 that is laterally disposed within the conduit 114. The flap 402 is positioned rotatable about an axis G substantially normal to the direction E of the flow of air (refer to FIG. 1). The flap 402 defines at least one opening 404 therethrough. For example, two openings 404 are shown in the flap of FIG. 4. However, in other embodiments, the flap may be configured to define fewer or more openings depending upon specific requirements of the application. The two openings 404 defined in the flap are together configured to allow the pre-determined minimal amount of air to flow into the combustion chambers 102 of the engine 100 when the flap is in a fully closed position.

In various embodiments of the present disclosure, a size of the opening 132/ 308/ 404 may lie in the range of approximately about 0.3% to 35% of an internal circumference of the conduit 114. For example, referring to FIG. 4, in one application, a diameter of the conduit may be 50 centimetre (cm) while a diameter of each of the two openings 404 may be lie in the range of 7 to 15 cm. Referring to FIG. 3, in another example, an internal circumference of the conduit 114 may be 30 cm while the circumference of the opening 308 may be in the range of about 4 to 6 cm. Therefore, it will be appreciated by persons skilled in the art that depending on specific requirements of an engine, the size of the opening *i.e.,* 132/ 308/ 404 may be selected such that the opening is configured to deliver the pre-determined minimal amount of air for the given engine.

Various embodiments disclosed herein are to be taken in the illustrative and explanatory sense, and should in no way be construed as limiting of the present disclosure. All directional references (e.g., axial, radial, above, below, upper, lower, top, bottom, vertical, horizontal, inward, outward, upward, downward, left, right, leftward, rightward, L.H.S, R.H.S, clockwise, and counterclockwise) are only used for identification purposes to aid the reader's understanding of the present disclosure, and may not create limitations, particularly as to the position, orientation, or use of the devices and/or methods disclosed herein. Joinder references (e.g., attached, affixed, coupled, engaged, connected, and the like) are to be construed broadly. Moreover, such joinder references do not necessarily infer that two elements are directly connected to each other.

Additionally, all numerical terms, such as, but not limited to, "first", "second", "third", or any other ordinary and/or numerical terms, should also be taken only as identifiers, to assist the reader's understanding of the various elements, embodiments, variations and/ or modifications of the present disclosure, and may not create any limitations, particularly as to the order, or preference, of any element, embodiment, variation and/or modification relative to, or over, another element, embodiment, variation and/or modification.

It is to be understood that individual features shown or described for one embodiment may be combined with individual features shown or described for another embodiment. The above described implementation does not in any way limit the scope of the present disclosure. Therefore, it is to be understood although some features are shown or described to illustrate the use of the present disclosure in the context of functional segments, such features may be omitted from the scope of the present disclosure without departing from the spirit of the present disclosure as defined in the appended claims.

### Industrial Applicability

Embodiments of the present disclosure have applicability for implementation and use in large medium-speed Otto and Dual Fuel engines that operate in idling state or in low-load conditions.

When the engine 100 is operating in an idle state or a very low-load condition, the opening 132/ 308/ 404, defined between the flap/s 116 and 118/ 302/ 402 and the internal surface 130 of the conduit 114, provides or allows passage of the pre-determined minimal amount of air to the engine 100. It is hereby envisioned that the minimal amount of air, pre-determined or calibrated beforehand for idling and low-load conditions of a given engine, can help the fuel within the combustion chambers 102 of the engine 100 to undergo combustion. Moreover, as this minimal amount of air helps to maintain an optimal air-fuel ratio during idling or low-load condition, the minimal amount of air disclosed herein can help the combustion of fuel in the engine 100 to be complete.

Moreover, as previously known designs of throttle bodies entailed the use of complex mechanisms for accomplishing the supply of air during idling and low-load conditions of engine operation, such previously known designs may be difficult to implement in large bore medium-speed engines. In some cases, the previously known throttle bodies may not be designed to conform to various dimensions of such large bore engines. In other cases, it may be difficult to install such previously known designs of throttle bodies at desired locations such as between the turbocharger 108 and the charge air cooler 110 of the present disclosure.

With use of the embodiments disclosed herein, the throttle valve 112 of the present disclosure has a simple yet effective configuration of components that define the opening 132/ 308/ 404 and facilitate an optimum amount of air flow in large bore medium-speed engines when the engines operate in the idle state or a low-load condition. Therefore, the design and use of this throttle valve 112 may be simple and economical as compared to previously known designs of throttle valves.

While aspects of the present disclosure have been particularly shown and described with reference to the embodiments above, it will be understood by those skilled in the art that various additional embodiments may be contemplated by the modification of the disclosed machines, systems and methods without departing from the spirit and scope of what is disclosed. Such embodiments should be understood to fall within the scope of the present disclosure as determined based upon the claims and any equivalents thereof.

## Claims

1. A throttle valve (112) for regulating a flow of air into an internal combustion engine (100), the throttle valve (112) comprising:
a conduit (114);
a first flap (116) laterally disposed within the conduit (114) and positioned rotatable about a first axis C-C', the first axis C-C' being disposed at an angle to a direction (E) of the flow of air; and
a second flap (118) laterally disposed within the conduit (114) and located adjacent to the first flap (116), the second flap (118) positioned rotatable about a second axis D-D', the second axis D-D' being disposed at an angle to the direction (E) of the flow of air, wherein a portion (126) of the first flap (116) and a portion (128) of the second flap (118) are each disposed away from an internal surface (130) of the conduit (114), the portions (126, 128) of the first and second flaps (116, 118) configured to define an opening (132) with the internal surface (130) of the conduit (114).

2. The throttle valve (112) of claim 1, wherein the opening (132) is configured to allow a pre-determined minimal amount of air to flow into a combustion chamber (102) of the engine (100) when the first flap (116) and the second flap (118) are in the fully closed position.

3. The throttle valve (112) of claim 1, wherein a cross-section of the conduit (114), taken along a plane (B-B') corresponding to the fully closed position of the first and second flaps (116, 118), is at least one of substantially square, rectangular, circular, oblong, elliptical, reniform, square, and polygonal.

4. The throttle valve (112) of claim 1, wherein a combined shape of the first and second flaps (116, 118) is at least one of circular, oblong, elliptical, reniform, square, rectangular, and polygonal.

5. The throttle valve (112) of claim 1, wherein a size of the opening (132) lies in the range of approximately about 0.3% to 35% of an internal circumference of the conduit (114).

6. The throttle valve (112) of claim 1, wherein the conduit (114) is configured to extend between a turbocharger (108) and a charge air cooler (110) associated with the engine (100).

7. A throttle valve (112) for regulating a flow of air into an internal combustion engine (100), the throttle valve (112) comprising:
a conduit (114);
a flap (302) laterally disposed within the conduit (114) and positioned rotatable about an axis (F), the axis (F) being disposed at an angle to a direction (E) of the flow of air, the flap (302) comprising:
a first portion (304) disposed proximal to an internal surface (130) of the conduit (114); and
a second portion (306) disposed in a contiguous relation with the first portion (304) and spaced away from the internal surface (130) of the conduit (114) to define an opening (308) with the internal surface (130) of the conduit (114), wherein the opening (308) is configured to allow a pre-determined minimal amount of air to flow into a combustion chamber (102) of the engine (100) when the flap (302) is in a fully closed position.

8. The throttle valve (112) of claim 7, wherein a size of the opening (308) lies in the range of approximately about 0.3% to 35% of an internal circumference of the conduit (114).

9. The throttle valve (112) of claim 7, wherein a cross-section of the conduit (114), taken in a plane (B-B') corresponding to the fully closed position of the flap (302), is at least one of substantially square, rectangular, circular, oblong, elliptical, reniform, square, and polygonal.

10. The throttle valve (112) of claim 7, wherein a shape of the flap (302) is at least one of circular, oblong, elliptical, reniform, square, rectangular, and polygonal.

11. The throttle valve (112) of claim 7, wherein the conduit (114) is configured to extend between a turbocharger (108) and a charge air cooler (110) associated with the engine (100).

12. A throttle valve (112) for regulating a flow of air into an internal combustion engine (100), the throttle valve (112) comprising:
a conduit (114);
a flap (402) laterally disposed within the conduit (114) and positioned rotatable about an axis (G), the axis (G) being disposed at an angle to a direction (E) of the flow of air, the flap (402) defining at least one opening (404) therethrough, wherein the at least one opening (404) is configured to allow a pre-determined minimal amount of air to flow into a combustion chamber (102) of the engine (100) when the flap (402) is in a fully closed position.

13. The throttle valve (112) of claim 12, wherein the opening (404) is configured to allow the pre-determined minimal amount of air to flow into the combustion chamber (102) of the engine (100) when the engine (100) is in an idle state.

14. The throttle valve (112) of claim 12, wherein a size of the opening (404) lies in the range of approximately about 0.3% to 35% of an internal circumference of the conduit (114).

15. The throttle valve (112) of claim 12, wherein the conduit (114) is configured to extend between a turbocharger (108) and a charge air cooler (110) associated with the engine (100).
